# EUROPEAN PATENT SPECIFICATION

(11) **EP 4 453 687 B1**
(45) Date of publication and mention of the grant of the patent: **15.07.2026**
(21) Application number: 23715377.0
(22) Date of filing: 10.03.2023
(51) Int. Cl.: G06F 1/16, G06F 1/3231, G06F 1/3234, G06F 3/01, G06N 20/00

(54) **ELECTRONIC DEVICE AND METHOD FOR ACTIVITY DETECTION**
ELEKTRONISCHE VORRICHTUNG UND VERFAHREN ZUR AKTIVITÄTSDETEKTION
DISPOSITIF ÉLECTRONIQUE ET PROCÉDÉ DE DÉTECTION D'ACTIVITÉ

(43) Date of publication of application: 30.10.2024
(73) Proprietor: Google LLC, Mountain View, CA 94043 (US)
(72) Inventor: LIU, Fang, Mountain View California 94043 (US); TREHAN, Chintan, Mountain View California 94043 (US); CHANG, David, Mountain View California 94043 (US); FANTIN, Juan M., Mountain View California 94043 (US); WONG, Amy, Mountain View California 94043 (US); SAINI, Vivek, Mountain View California 94043 (US); YAN, Ting, Mountain View California 94043 (US); SANDERS, Nicholas, Mountain View California 94043 (US); PULLI, Kari, Mountain View California 94043 (US)
(74) Representative: Maikowski & Ninnemann Patentanwälte Partnerschaft mbB
(86) International application number: PCT/US2023/064131
(87) International publication number: WO 2024/191446

(56) References cited:
- US-A1- 2017 034 320
- US-A1- 2017 163 788
- US-A1- 2021 132 769
- US-A1- 2022 261 084
- US-A1- 2023 023 149
- US-B1- 10 885 910

## Description

### BACKGROUND

An electronic device can be designed to operate in a mode in which the electronic device can be supported by and receive power from a docking station and operate in a mode in which the electronic device is detached from the docking station and portably supported by a user. Some electronic devices switch between modes based on proximity sensing. However, power requirements of the proximity sensing mechanisms included these electronic devices is often unsustainable.

US 10,885,910 B1 discloses a method for voice-forward graphical user interface mode management. It includes determining that a device is coupled to an accessory device, determining that being coupled to the accessory device causes the device to deactivate a first operating mode and activate a second operating mode, where the second operating mode has a lower content density than the first operating mode, and determining that an application setting of an application executing on the device is causing the device to remain in the first operating mode. Example methods may include determining that a new value is associated with the application setting, and causing the device to activate the second operating mode.

US 2017/0034320 A1 discloses an electronic device. The device includes a housing, one or more processors, and a display. The display, housing, and other components are flexible, stretchable, squeezable, or otherwise deformable in one or more embodiments. One or more flex sensors are operable with the one or more processors, as is a gravity sensor such as an accelerometer. The one or more processors can detect a bending operation with the one or more flex sensors that deforms one or more of the housing or the display into a deformed geometry. The one or more sensors can then determine a gravity direction with the gravity sensor, after the bending operation and operate the electronic device in a predefined mode of operation as a function of both the deformed geometry and the gravity direction.

### SUMMARY

Embodiments described herein pertain to an electronic device and method for activity detection. The invention is defined by the independent claims. Features of certain embodiments are defined in the dependent claims.

### BRIEF DESCRIPTION OF THE DRAWINGS

A further understanding of the nature and advantages of various embodiments may be realized by reference to the following figures. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 illustrates an example environment of an electronic device according to some implementations of the present disclosure.
FIG. 2 illustrates another example environment of an electronic device according to some implementations of the present disclosure.
FIG. 3 illustrates an example of an electronic device according to some implementations of the present disclosure.
FIG. 4 illustrates an example of a static charge sensor according to some implementations of the present disclosure.
FIG. 5 illustrates another example of a static charge sensor according to some implementations of the present disclosure.
FIG. 6 illustrates an example of a static charge signal according to some implementations of the present disclosure.
FIG. 7 illustrates another example of a static charge signal according to some implementations of the present disclosure.
FIG. 8 illustrates another example of a static charge signal according to some implementations of the present disclosure.
FIG. 9 illustrates another example of a static charge signal according to some implementations of the present disclosure.
FIG. 10 illustrates an example process for operating an electronic device according to some implementations of the present disclosure.
FIG. 11 illustrates another example process for operating an electronic device according to some implementations of the present disclosure.

### DETAILED DESCRIPTION

Some electronic devices can switch between operating modes based on proximity. For example, an electronic device can detect that a user is approaching and switch from a sleeping mode to a waking mode. Such an electronic device typically includes one or more proximity sensing mechanisms for detecting a user's proximity to the electronic device. Proximity sensing mechanisms incorporated in these electronic devices often detect the user's proximity based on light or sound signals emitted from the electronic device and reflected from the user. Typically, these proximity sensing mechanisms include their own circuitry for emitting and receiving signals and performing subsequent processing on the signals. As a result, these proximity sensing mechanisms often consume a lot of power and are costly, which in turn increases power consumption and costs of the electronic devices they are incorporated in. Additionally, these proximity sensing mechanisms often consume valuable internal space of the electronic devices they are incorporated in.

Features described herein overcome these challenges by providing an electronic device that can selectively activate and/or deactivate detectors based on an operating mode of the electronic device and selectively change an operating mode of the electronic device based on detected activity of an object or subject in an environment surrounding the electronic device. The electronic device can include detectors for receiving signals reflected from an object or subject performing an activity in an environment surrounding the electronic device. A first detector can receive ultrasonic signals, a second detector can receive radar signals, and a third detector can receive static charge signals. The electronic device can operate in different operating modes. In a first operating mode such as a docked mode, the electronic device can detect activity performed by the object or subject based on the first detector and/or second detector, and, in a second operating mode such as a tablet mode, the electronic device can detect activity performed by the object or subject based on the third detector. The third detector can consume less power than the first and second detectors. The detectors can share components and/or circuitry with other components of the electronic device. For example, the first detector can share components and/or circuitry with an audio system of the electronic device and the third detector can share components and/or circuitry with an orientation system of the electronic device.

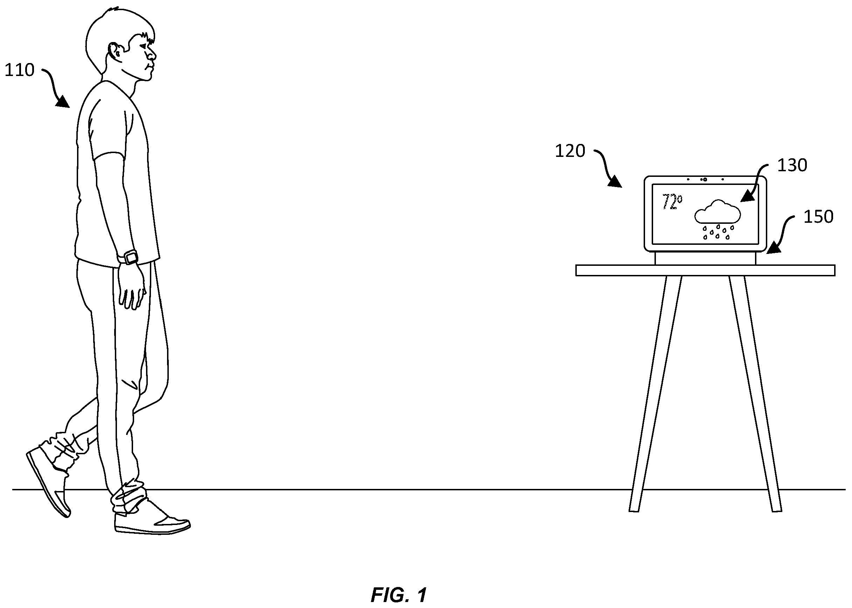

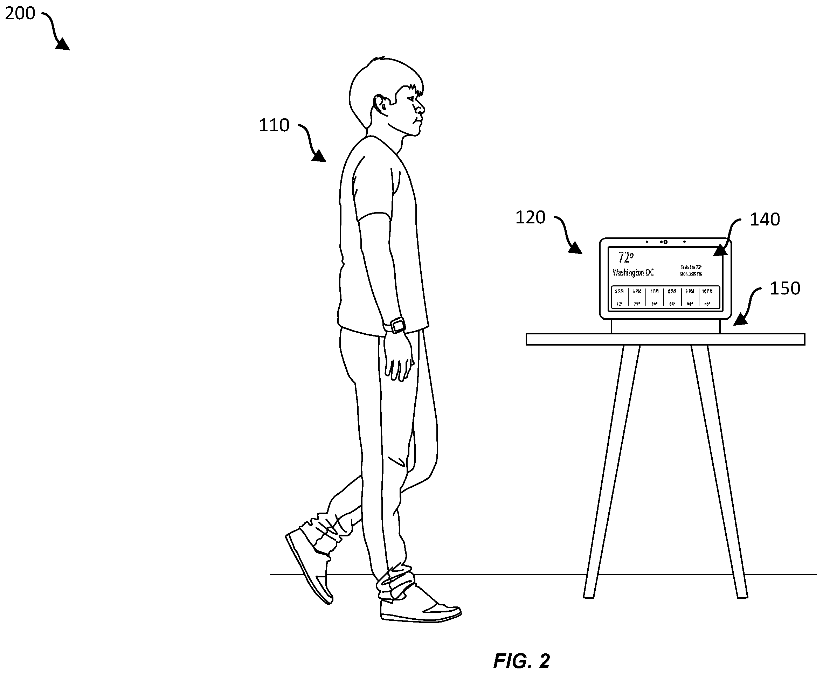

Activity can be detected and classified using a trained machine-learning model and the electronic device can change operating modes and update a display screen based on the detected and classified activity. For example, as shown in FIG 1, an electronic device 120 can be operating in a docked mode in which the electronic device 120 is supported by and receiving power from a docking station 150. While in the docked mode, the electronic device 120 can display on its display screen a first type of content such as daily weather content. A person 110 can approach the electronic device 120 and the electronic device 120 can detect and classify the user's activity as a walking type activity. In response, the electronic device 120 can then update the content displayed on its display screen to a second type of content. For example, as shown in FIG. 2, the electronic device 120 update the daily weather content displayed on its screen to weekly weather content.

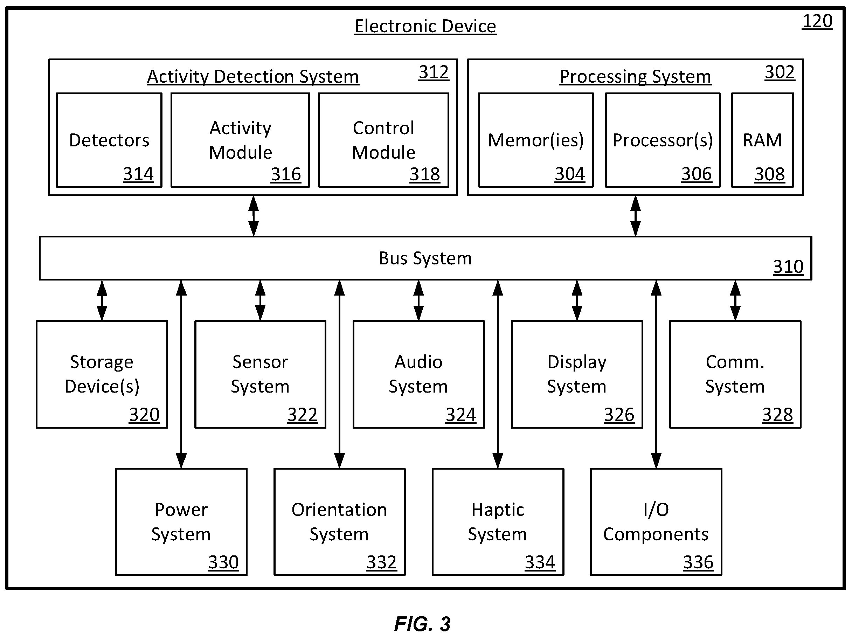

FIG. 3 is an illustration of an example electronic device 120. The electronic device 120 can be implemented in various configurations in order to provide various functionality to a user. For example, the electronic device 120 can be implemented as an assistant device (e.g., Google^{®} Nest^{®} Hub; Google^{®} Nest^{®} Hub Max); a home automation controller (e.g., controller for an alarm system, thermostat, lighting system, door lock, motorized doors, etc.); a gaming device (e.g., a gaming system, gaming controller, data glove, etc.); a communication device (e.g., a smart phone such as a Google^{®} Pixel^{®} Phone, cellular phone, mobile phone, wireless phone, portable phone, radio telephone, etc.); and/or other computing device (e.g., a tablet computer, phablet computer, notebook computer, laptop computer, etc.). The foregoing implementations are not intended to be limiting and the electronic device 120 can be implemented as any kind of electronic or computing device that can be configured to detect activity using a part of or all of the methods disclosed herein.

The electronic device 120 includes processing system 302, which includes one or more memories 304, one or more processors 306, and RAM 308. The one or more processors 306 can read one or more programs from the one or more memories 304 and execute them using RAM 308. The one or more processors 306 can be of any type including but not limited to a microprocessor, a microcontroller, a graphical processing unit, a digital signal processor, an application-specific integrated circuit (ASIC), a field programmable gate array (FPGA), or any combination thereof. In some embodiments, the one or more processors 306 can include a plurality of cores, a plurality of arrays, one or more coprocessors, and/or one or more layers of local cache memory. The one or more processors 306 can execute one or more programs stored in the one or more memories 304 to perform the operations and/or methods, including parts thereof, disclosed herein.

The one or more memories 304 can be non-volatile and can include any type of memory device that retains stored information when powered off. Non-limiting examples of memory include electrically erasable and programmable read-only memory (EEPROM), flash memory, or any other type of non-volatile memory. At least one memory of the one or more memories 304 can include a non-transitory computer-readable storage medium from which the one or more processors 306 can read instructions. A computer-readable storage medium can include electronic, optical, magnetic, or other storage devices capable of providing the one or more processors 306 with computer-readable instructions or other program code. Non-limiting examples of a computer-readable storage medium include magnetic disks, memory chips, read-only memory (ROM), RAM, an ASIC, a configured processor, optical storage, or any other medium from which a computer processor can read the instructions.

The electronic device 120 also includes a bus system 310. The bus system 310 can be configured to connect components of the electronic device 120 to the processing system 302 to transfer data and provide the electronic device 120 with various functionality.

The electronic device 120 also includes activity detection system 312, which includes detectors 314, an activity module 316, and a control module 318. The activity detection system 312 can be configured with hardware and software that enables the activity detection system 312 to detect that an activity is being performed by an object or subject within an environment surrounding the electronic device 120 based on the detectors 314, classify the detected activity as corresponding to an activity type, and control the electronic device 120 based on the classified activity. In some implementations, the activity detection system 312 includes one or more special-purpose or general-purpose processors that are specifically designed to perform the functions of the activity detection system 312.

The detectors 314 can include an ultrasonic sensor that is configured to receive ultrasonic signals reflected from an object or subject in an environment surrounding the electronic device 120. The ultrasonic sensor can include an audio output device that is configured to emit ultrasonic signals and an audio input device that is configured to receive the ultrasonic signals emitted by the audio output device that have been reflected by an object or subject in the environment surrounding the electronic device 120. The ultrasonic sensor can also include signal processing circuitry that is configured to amplify the received ultrasonic signals, convert the amplified ultrasonic signals into digital ultrasonic signals, filter noise from the digital ultrasonic signals, and store the filtered ultrasonic signals in a storage device such as the one or more storage devices 320 of the electronic device 120. In some implementations, the signal processing circuitry can be configured to measure a distance or range to the object or subject from the electronic device 120 based on the emitted and received ultrasonic signals. For example, the signal processing circuitry can be configured to measure the distance based on the time it takes for ultrasonic signals emitted by the audio output device to be received by the audio input device. In some implementations, the audio input and output devices can be audio input and output devices of the audio system 324 of the electronic device 120 such as a speaker and a microphone. In some implementations, the signal processing circuitry can be signal processing circuitry included in a component of the electronic device 120. For example, the signal processing circuitry can be signal processing circuitry included in a motion sensor of the orientation system 332 of the electronic device 120.

The detectors 314 can also include a radar sensor that is configured to receive radar signals reflected from an object or subject in an environment surrounding the electronic device 120. The radar sensor can include an emitter device that is configured to emit radar signals (e.g., electromagnetic waves) and a receiver device that is configured to receive the radar signals emitted by the emitter device that have been reflected by an object or subject in the environment surrounding the electronic device 120. The radar sensor can also include signal processing circuitry that is configured to amplify the received radar signals, convert the amplified radar signals into digital radar signals, filter noise from the digital radar signals, and store the filtered radar signals in a storage device such as the one or more storage devices 320 of the electronic device 120. In some implementations, the signal processing circuitry can be configured to measure a distance or range to the object or subject based on the emitted and received radar signals. For example, the signal processing circuitry can be configured to measure the distance based on the time it takes for radar signals emitted by the emitter device to be received by the receiver device. In some implementations, the signal processing circuitry can be signal processing circuitry included in a component of the electronic device 120. For example, the signal processing circuitry can be signal processing circuitry included in an image sensor of the sensor system 322 of the electronic device 120.

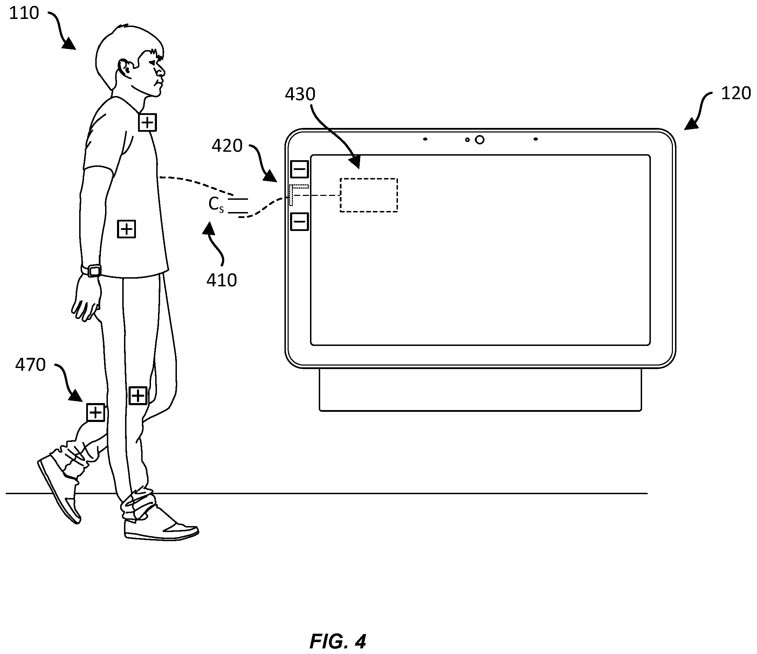

The detectors 314 can also include a static charge sensor that is configured to receive charge from an object or subject in an environment surrounding the electronic device 120. The static charge sensor can include an antenna that is configured to receive the charge from an object or subject in an environment surrounding the electronic device 120. For example, as shown in FIG. 4, an object or subject such as person 110 can store charge 470 (e.g., a positive charge and/or a negative charge) and form a capacitor having a capacitance Cₛ 410 with the antenna 420. The static charge sensor can also include signal processing circuitry that is configured to amplify the received charge, convert the amplified charge into a digital charge signal, filter noise from the digital charge signal, and store the filtered charge signal in a storage device such as the one or more storage devices 320 of the electronic device 120. In some implementations, the signal processing circuitry can be configured to measure a distance or range to the object or subject from the electronic device 120 based on the received charge. For example, the signal processing circuitry can be configured to measure the distance based on an amplitude of the received charge. In some implementations, the signal processing circuitry can be configured to detect whether the object or subject is moving. In other implementations, the signal processing circuitry can be configured to detect gestures performed by the object or subject. In some implementations, as shown in FIG. 4, the signal processing circuitry can be circuitry 430 included in a component of the electronic device 120. For example, the signal processing circuitry can be signal processing circuitry included in an inertial measurement unit of the orientation system 332 of the electronic device 120.

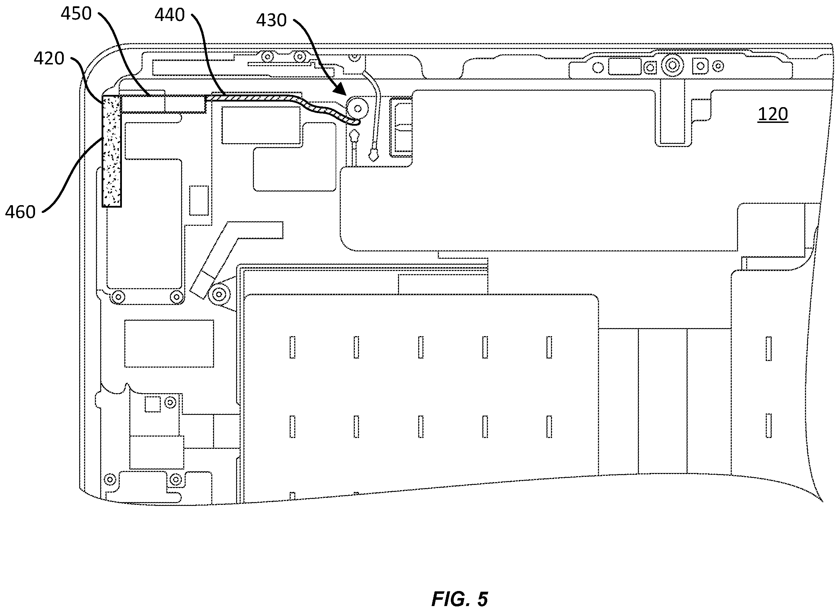

The antenna can be attached to a component of the electronic device 120. For example, as shown in FIG. 5, the antenna 420 can be attached to an internal component of the electronic device 120 and can include a cable 440 for connecting the antenna 420 to circuitry 430 such that charge received by the antenna 420 can be transferred to and processed by the circuitry 430. In some implementations, the antenna can be attached to any internal component of the electronic device 120. For example, the antenna can be attached to a flexible printed circuit board of the electronic device 120. In another example, the antenna can be attached an internal support structure of the electronic device 120. Additionally, or alternatively, the antenna can be attached to any external component of the electronic device 120. For example, the antenna can be attached to a housing or display bezel of the electronic device 120. In some implementations, the antenna can be attached to the electronic device 120 or its housing or a component thereof such that the entire antenna is located in an internal compartment of the electronic device 120. In other implementations, the antenna can be attached to the electronic device 120 such that the entire antenna or a portion thereof is located external to the electronic device 120.

The antenna can be constructed with one or more wires. A wire can be a solid core wire or stranded core wire and can be made from any metallic material that can conduct charge. For example, the antenna can be configured with a first solid core copper wire and a second stranded core gold wire. Exemplary metallic materials include but are not limited to copper, gold, silver, steel, aluminum, and bronze. A wire can range in length between 10 mm and 50 mm and range in diameter between 1 mm and 12 mm. For example, the antenna can be configured with a wire that is 26 mm in length and 3.5 mm in diameter. Using the one or more wires, the antenna can be configured into one or more two-dimensional and/or three-dimensional shapes. Examples of shapes include rectangles, squares, triangles, discs, polygons, cubes, cones, and the like. For example, as shown in the FIG. 5, using a first wire 450 and a second wire 460, the antenna 420 can be configured into a two-dimensional L-shape. Additionally, or alternatively, the shape can be configured as a hollow shape or a solid shape. For example, as shown in the FIG. 5, the first wire 450 can form a two-dimensional hollow rectangular shape (i.e., a rectangular loop) and the second wire 460 can form a two-dimensional solid rectangular shape. In some implementations, the antenna can be configured such that a total area or volume of the antenna corresponds to predetermined minimum area or volume. For example, the antenna can be configured to have total a minimum area of 60 millimeters squared.

The cable 440 can also be configured with one or more wires, including solid core metallic or stranded core metallic wires. Additionally, or alternatively, the cable 440 can be configured to be a coaxial cable or twisted pair cable. For example, a first wire of the antenna can be connected to a first inner conductor of the cable 440 and a second wire of the antenna can be connected to a second outer conductor of the cable 440. The cable 440 can be connected to the antenna 420 and the circuitry 430 using one or more conductive cable connectors and/or fastening mechanisms. Similarly, the cable 440 can be connected to the circuitry 430 using one or more conductive cable connectors and/or fastening mechanisms.

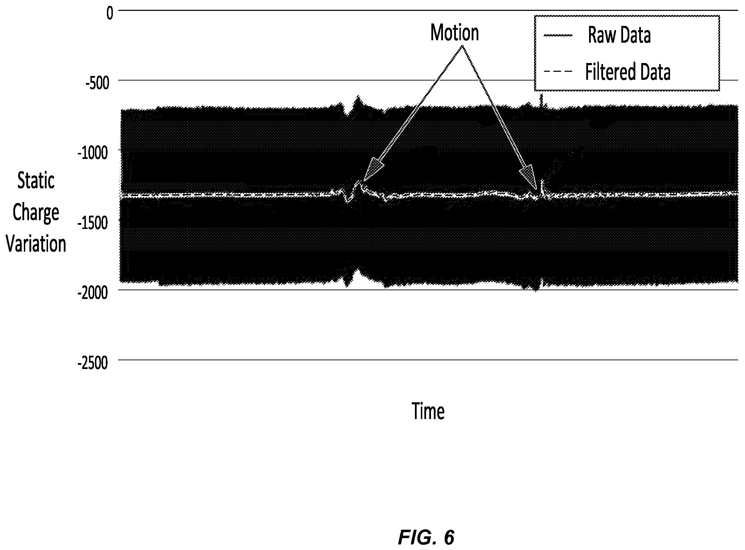

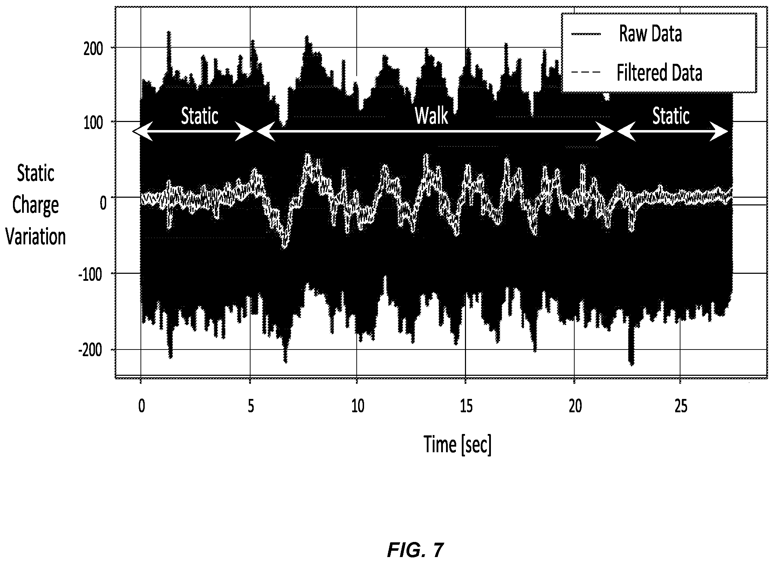

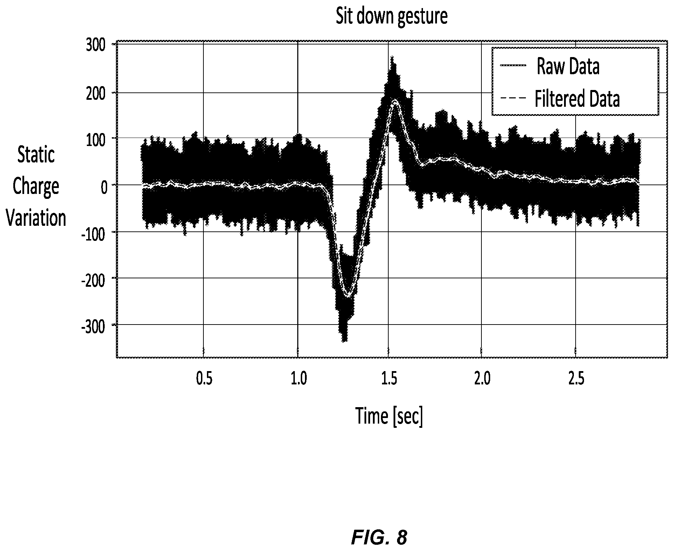

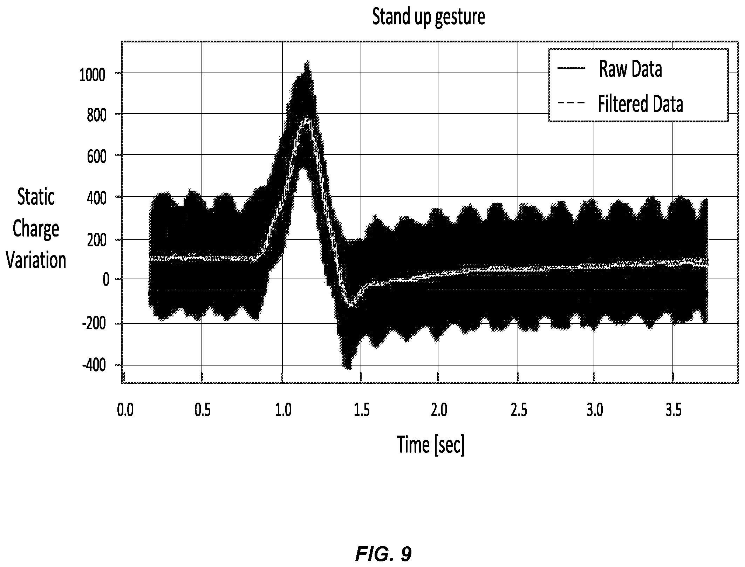

The antenna is configured to receive a variable amount charge from the object or subject depending on whether the object or subject is stationary, moving, and/or gesturing. For example, the antenna can be configured to receive a first amount of charge from a stationary object or subject, a second amount of charge from a moving object, and a third amount of charge from a gesturing object. Variations in the amount of charge received by the antenna can represent object or subject motion and used to distinguish an object or subject that is stationary from an object or subject is in motion and/or an object or subject that is gesturing. For example, as shown in FIG. 6, variations in the amount of charge received by the antenna can represent when an object or subject is motion. Additionally, variations in the amount of charge received by the antenna can also represent different types of motion. For example, as shown in FIG. 7, smaller variations of charge can represent that the object or subject is not in motion (i.e., static) and larger variations of charge can represent that the object or subject is in motion (i.e., walking). Additionally, duration of the variations in the amount of charge received and changes in amplitude polarity of the variations in amount of charge received can represent different types of gestures. For example, as shown in FIG. 8, an instance of a large variation from a negative peak to a positive peak can represent a gesture that the object or subject is sitting down. Similarly, as shown in FIG. 9, an instance of a large variation from a positive peak to a negative peak can represent a gesture that the object or subject is standing up.

In some implementations, the ultrasonic sensor is configured to consume a first amount of power, the radar sensor is configured to consume a second of amount of power, and the static charge sensor is configured to consume to a third of amount of power. The first amount of power can be less than the second amount of power and the first and second amounts of power can be less than the third amount of power. In other implementations, the first amount of power can be greater than or equal to the second amount of power and less than the third of amount of power.

In some implementations, the ultrasonic sensor, radar sensor, and static charge sensor can be activated or powered on in which the electronic device 120 can receive signals from these sensors and deactivated or powered off in which the electronic device 120 cannot receive signals from these sensors. For example, the control module 318 can be configured to activate/power on the ultrasonic sensor while the radar sensor and static charge sensor are deactivated/powered off. In another example, the control module 318 can be configured to activate/power on the ultrasonic sensor, the radar sensor, and the static charge sensor. In a further example, the control module 318 can be configured to activate/power on the static charge sensor while the ultrasonic sensor and the radar sensor are deactivated/powered off.

In some implementations, the ultrasonic sensor, radar sensor, and static charge sensor can be activated/powered on and/or deactivated/powered off depending on an operation of the electronic device 120. For example, the control module 318 can be configured to control the electronic device 120 to operate in different operating modes and can be configured to activate/power on and/or deactivate/power off one or more of the ultrasonic sensor, the radar sensor, and static charge sensor depending on the operating mode the electronic device 120 is operating in.

In some implementations, the operating modes can include a docked mode and a tablet mode. The docked mode refers to an operating mode of the electronic device 120 when the electronic device 120 is supported by and receiving power from a docking station such as docking station 150. The control module 318 can be configured to detect when the electronic device 120 is supported by and receiving power from the docking station 150 and control the electronic device 120 to operate in the docked mode. For example, the control module 318 can determine whether orientation signals output by the orientation system 332 indicate that the electronic device 120 is supported by the docking station 150 and whether power signals output by the power system 330 indicate that the electronic device 120 is receiving power from the docking station 150 and, if so indicated, control the electronic device 120 to operate in the docked mode. When the control module 318 sets the electronic device 120 to operate in the docked mode, the control module 318 can be configured to activate one or more of the ultrasonic sensor, the radar sensor, and the static charge sensor and/or deactivate one or more of the ultrasonic sensor, the radar sensor, and the static charge sensor. Additionally, or alternatively, when the electronic device 120 is supported by and receiving power from the docking station 150, the electronic device 120 can function as a hub and be configured to control one or more devices.

The tablet mode refers to an operating mode of the electronic device 120 when the electronic device is not supported by and not receiving power from the docking station 150 (i.e., detached from the docking station 150). The control module 318 can be configured to detect when the electronic device 120 is detached from the docking station 150 and control the electronic device 120 to operate in the tablet mode. For example, the control module 318 can determine whether orientation signals and power signals indicate that the electronic device 120 is detached from the docking station 150 and, if so indicated, control the electronic device 120 to operate in the tablet mode. When the control module 318 sets the electronic device 120 to operate in the tablet mode, the control module 318 can be configured to activate the static charge sensor and deactivate the ultrasonic sensor and the radar sensor. In this way, since the electronic device 120 is not receiving power from a docking station, the electronic device 120 can be configured to consume less power in the tablet mode than in the docked mode.

In other implementations, the operating modes can include an active mode and a power saving mode. The control module 318 can be configured to control the electronic device 120 to operate in the active mode when the activity module 316 detects that an activity is being performed within an environment surrounding the electronic device 120 and control the electronic device 120 to operation in the power saving mode when the activity module 316 does not detect that an activity is being performed within the environment surrounding the electronic device 120. When the control module 318 sets the electronic device 120 to operate in the active mode, the control module 318 can be configured to activate one or more of the ultrasonic sensor, the radar sensor, and the static charge sensor and/or deactivate one or more of the ultrasonic sensor, the radar sensor, and the static charge sensor. When the control module 318 sets the electronic device 120 to operate in the power saving mode, the control module 318 can be configured to activate the static charge sensor and deactivate the ultrasonic sensor and the radar sensor. Additionally, in some implementations, when the control module 318 sets the electronic device 120 to operate in the power saving mode, the control module 318 can be configured to deactivate one or more other components of the electronic device 120. For example, in the power saving mode, the control module 318 can deactivate or power off the audio system 324 and haptic system 334. In this way, the electronic device 120 can be configured to consume less power in the power saving mode than in the active mode.

The activity module 316 is configured to detect that an activity is being performed by an object or subject within an environment surrounding the electronic device 120 based on the signals received by the detectors 314 and classify the detected activity as corresponding to an activity type. The activity module 316 is configured to detect that an activity is being performed by an object or subject within an environment surrounding the electronic device 120 using a first machine-learning model included in the activity module 316. In some implementations, the activity module 316 can be configured to retrieve a signal from a detector of the detectors 314 and/or from a storage device such as the one or more storage devices 320 of the electronic device 120 and input the retrieved signal into the first machine-learning model and the first machine-learning model can be configured to detect that an activity is being performed based on the retrieved signal. For example, the activity module 316 can be configured to retrieve an ultrasonic signal from the ultrasonic sensor or a storage device and the first machine-learning model can be configured detect that an activity is being performed based on the retrieved ultrasonic signal. In another example, the activity module 316 can be configured to retrieve a radar signal from the radar sensor or storage device and the first machine-learning model can be configured to detect that an activity is being performed based on the retrieved radar signal. In a further example, the activity module 316 can be configured to retrieve a charge signal from the static charge sensor or a storage device and the first machine-learning model can be configured to detect that an activity is being performed based on the retrieved charge signal.

In some implementations, the activity module 316 can be configured to determine which signal to retrieve based on the operating mode of the electronic device 120. For example, if the electronic device 120 is operating in the docked mode, the activity module 316 can be configured to retrieve a signal from the ultrasonic sensor, the radar sensor, or the static charge sensor. In another example, if the electronic device 120 is operating in the tablet mode, the activity module 316 can be configured to retrieve a signal from the static charge sensor.

The machine-learning model can be configured to detect that an activity is being performed by an object or subject within an environment surrounding the electronic device 120 based on a retrieved signal by classifying the retrieved signal as corresponding to an activity or not corresponding to an activity. For example, the machine-learning model can receive as an input a static charge signal retrieved from the static charge sensor and detect that an activity is being performed by object or subject by classifying the retrieved signal as corresponding to an activity signal.

The activity module 316 is configured to classify the detected activity as corresponding to an activity type using a second machine-learning model included in the activity module 316. The second machine-learning model can be configured to classify activity signals as corresponding an activity type of a set of activity types. The set of activity types can include motion activity and/or a gesturing activity. A motion activity refers to an activity in which an object or subject in an environment surrounding the electronic device 120 moves such as that a range between the object or subject and the electronic device 120 changes as the object or subject is moving. Examples of motion activities include but are not limited to walking and running. A gesturing activity refers to an activity in which a portion of an object or subject in an environment surrounding the electronic device 120 moves with respect to the electronic device 120. Examples of gesturing activities include but are not limited to sitting, standing, pointing, and reaching.

In some implementations, the first machine-learning model can be part of the second machine-learning model. In other implementations, the second machine-learning model can be part of the first machine-learning model. The first and second machine-learning models can include one or more neural networks. Additionally, or alternatively, the first and second machine-learning models can be configured as perceptron, naive bayes, decision tree, logistic regression, k-nearest neighbor, random forest, and/or support vector machine-type classifiers. In some implementations, the first and second machine-learning models can be pre-trained to detect and classify activities. In some implementations, the first and second machine-learning models can be trained and fine-tuned with signals corresponding to stationary, moving, and/or gesturing objects and including one or more labels characterizing the activity or activities of the objects or subjects depicted by the signals. In some implementations, the first and second machine-learning models can be trained and fine-tuned using one or more training and fine-tuning techniques such as unsupervised learning, semi-supervised learning, supervised learning, transfer learning, backpropagation, Adam optimization, reinforcement learning, and the like. The foregoing arrangements are not intended to be limiting and other machine-learning model arrangements are possible.

As discussed above, the control module 318 can be configured to control the electronic device 120 to operate in different operating modes. The control module 318 can also be configured to control the electronic device 120 based on the detected and/or classified activities. In some implementations, the control module 318 can be configured to control the electronic device 120 based on an activity signal being detected by the activity module 316. In some implementations, the control module 318 can be configured to operate the electronic device 120 in an active mode or power saving mode depending on whether an activity is detected by the activity module 316. For example, if the activity module 316 detects that an activity is being performed by an object or subject within an environment surrounding the electronic device 120, the control module 318 can be configured to operate the electronic device 120 in the active mode. In another example, if the activity module 316 detects that an activity is not being performed by an object or subject within the environment surrounding the electronic device 120, the control module 318 can be configured to operate the electronic device 120 in the power saving mode. In some implementations, while in the active mode and the power saving mode, the activity module 316 can periodically detect whether or not an activity is detected by the activity module 316. For example, in the active mode, the activity module 316 can detect whether an activity is detected by the activity module 316 once every 10-40 seconds and if an activity is not detected, the control module 318 can be configured to control the electronic device 120 to enter the power saving mode. In another example, in the power saving mode, the activity module 316 can detect whether an activity is detected by the activity module 316 once every 5-30 seconds and if an activity is detected, the control module can be configured to control the electronic device 120 to enter the active mode.

In some implementations, the control module 318 can be configured to control the electronic device 120 based on the activity type the activity signal is classified as corresponding to by the activity module 316. In some implementations, the control module 318 can be configured to update a display screen of the electronic device 120 depending on a type of activity the activity signal is classified as. For example, if the activity module 316 classifies that the activity being performed by an object or subject within an environment surrounding the electronic device 120 is a motion activity and/or a gesturing activity, the control module 318 can be configured to update the display screen of the electronic device 120 by dimming the display screen, brightening the display screen, and/or changing content displayed on the display screen. In some implementations, the display screen can be dimmed by deactivating/powering off and/or reducing a brightness of the display screen and the display screen can be brightened by activating/powering on and/or increasing a brightness of the display screen. In some implementations, changing content displayed on the display screen includes changing a font size of one or more characters and/or one or more numerals displayed on the display screen. In some implementations, when an activity is classified as a motion activity, the display screen can be dimmed and the content displayed on the display screen can be changed from a first type of content having a first font size to a second type of content having a second font size. For example, when an activity is classified as a motion activity, the control module 318 can be configured to dim the display screen and change the display screen from displaying daily weather content in a smaller font size to displaying weekly weather content in a larger font size. In some implementations, when an activity is classified as a gesturing activity, the display screen can be brightened and the content displayed on the display screen can be changed from the first or second type of content to a third type of content. In some implementations, the third type of content can be identical to the first type of content. For example, when the activity is classified as a gesturing activity, the control module 318 can be configured to change the display from displaying weekly weather content to displaying sports content.

The electronic device 120 also includes one or more storage devices 320 configured to store data received by and/or generated by the electronic device 120. The one or more storage devices 320 can be removable storage devices, non-removable storage devices, or a combination thereof. Examples of removable storage and non-removable storage devices include magnetic disk devices such as flexible disk drives and hard disk drives (HDDs), optical disk drives such as compact disk (CD) drives or digital versatile disk (DVD) drives, solid-state drives (SSDs), and tape drives.

The electronic device 120 also includes a sensor system 322 that can be configured to transmit and receive various signals (e.g., light, ultrasonic, radar, lidar, and the like) that can be used for sensing an environment surrounding the electronic device 120. Examples of sensing devices included in the sensor system 322 include digital and electronic cameras, light field cameras, 3D cameras, image sensors, imaging arrays, ultrasonic sensors, radar sensors, static charge sensors, range sensors, LiDAR sensors, and the like.

The electronic device 120 also includes an audio system 324 that can be configured to record sounds from an environment surrounding the electronic device 120 and output sounds to the environment surrounding the electronic device 120. Examples of audio devices included in audio system 324 include microphones, speakers, and other audio/sound transducers for receiving and outputting audio signals and other sounds.

The electronic device 120 also includes a display system 326 that can be configured to display images, video, and other content on a display screen of the electronic device 120 and receive input from a user of the electronic device 120. Examples of the display screen included in the display system 326 include a liquid crystal display, a light emitting diode display, an organic light emitting diode display, a projector display, a touchscreen display, and the like.

The electronic device 120 also includes a communications system 328 that can be configured to enable the electronic device 120 to communicate with various wired or wireless networks and other systems and devices. Examples of communications devices included in communications system 328 include wireless communication modules and chips, wired communication modules and chips, chips for communicating over local area networks, wide area networks, cellular networks, satellite networks, fiber optic networks, and the like, systems on chips, and other circuitry that enables the electronic device 120 to send and receive data.

The electronic device 120 also includes a power system 330 that can be configured to provide power to the electronic device 120. Examples of components included power system 330 include batteries, power supplies, charging circuits, solar panels, and other components that can be configured to receive power from a source external to the electronic device 120 or generate power and power the electronic device 120 with the received or generated power.

The electronic device 120 also includes an orientation system 332 that can be configured to determine an orientation and posture of the electronic device 120 and users of the electronic device 120. Examples of orientation detection devices included orientation system 332 include global positioning system (GPS) receivers, ultra-wideband (UWB) positioning devices, Wi-Fi positioning devices, accelerometers, gyroscopes, motion sensors, tilt sensors, inclinometers, angular velocity sensors, gravity sensors, and inertial measurement units, and the like.

The electronic device 120 also includes a haptic system 334 that can be configured to provide haptic feedback to and receive haptic feedback from a user of the electronic device 120. Examples of haptic devices included in haptic system 334 include vibrators, actuators, haptic feedback devices, and other devices that generate vibrations and provide other haptic feedback to users of the electronic device 120.

The electronic device 120 can also include other input/output (I/O) components 336. Examples of such input components can include a mouse, a keyboard, a trackball, a touch pad, a touchscreen display, a stylus, data gloves, and the like. Examples of such output components can include holographic displays, 3D displays, projectors, and the like.

The foregoing configurations of the electronic device 120 are not intended to be limiting and the electronic device 120 can include other devices, systems, and components.

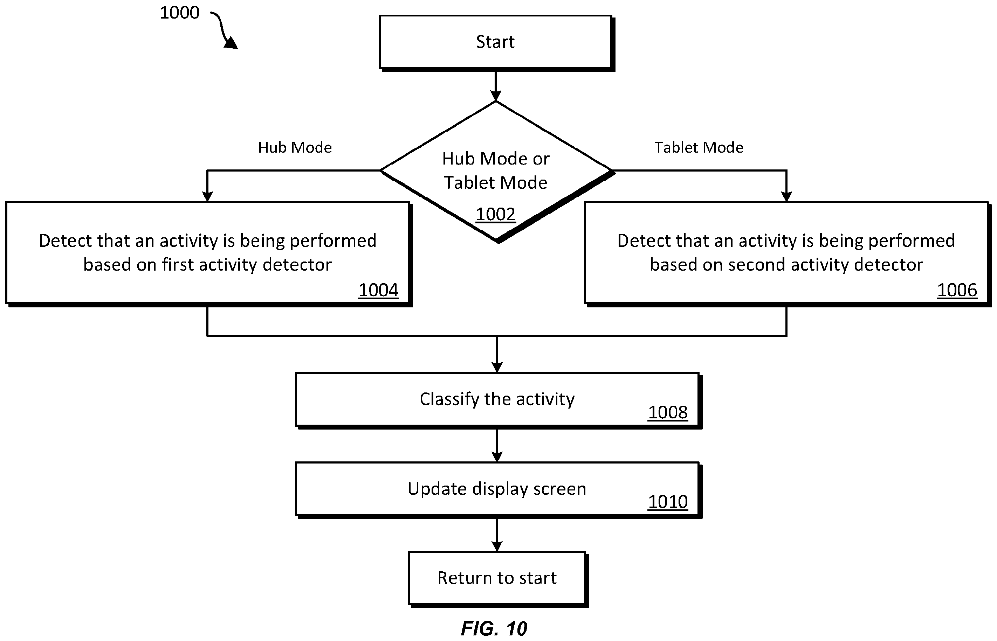

FIG. 10 illustrates of a flowchart of an example process 1000 for operating an electronic device. The process 1000 can be implemented by an electronic device such as the electronic device 120 as shown in FIG. 3. Additionally, the process 1000 can be implemented in software or hardware or any combination thereof.

At block 1002, it is detected whether the electronic device is in a docked mode or tablet mode. In some implementations, detecting that the electronic device is in the docked mode includes detecting that the electronic device is attached to a docking station and detecting that the electronic device is in the tablet mode includes detecting that the electronic device is detached from the docking station.

In response to detecting that the electronic device is in the docked mode, at block 1004, it is detected whether a first activity is being performed in an environment surrounding the electronic device based on a first detector. In some implementations, the first detector is an ultrasonic sensor and detecting that the first activity is being performed within the environment surrounding the electronic device based on the first detector includes receiving of ultrasonic signals with the ultrasonic sensor. In other implementations, the first detector is a radar sensor and detecting that the first activity is being performed within the environment surrounding the electronic device based on the first detector includes receiving of radar signals with the radar sensor.

In response to detecting that the electronic device is in the tablet mode, at block 1006, it is detected whether a second activity is being performed in an environment surrounding the electronic device based on a second detector. In some implementations, the second detector is a static charge sensor and detecting that the second activity is being performed within the environment surrounding the electronic device based on the second detector includes receiving a charge with the static charge sensor.

At block 1008, the detected first activity and/or the detected second activity is classified as corresponding to an activity type of a plurality of activity types. In some implementations, classifying the first activity as corresponding to an activity type of a plurality of activity types and classifying the second activity as corresponding to an activity type of the plurality of activity types includes classifying signals using a trained machine learning model.

At block 1010, a display screen of the electronic device is updated based on the activity type of the first and second activities. In some implementations, updating the display screen of the electronic device in the docked mode and updating the display screen of the electronic device in the tablet mode includes at least one of brightening the display screen and changing content displayed on the display screen.

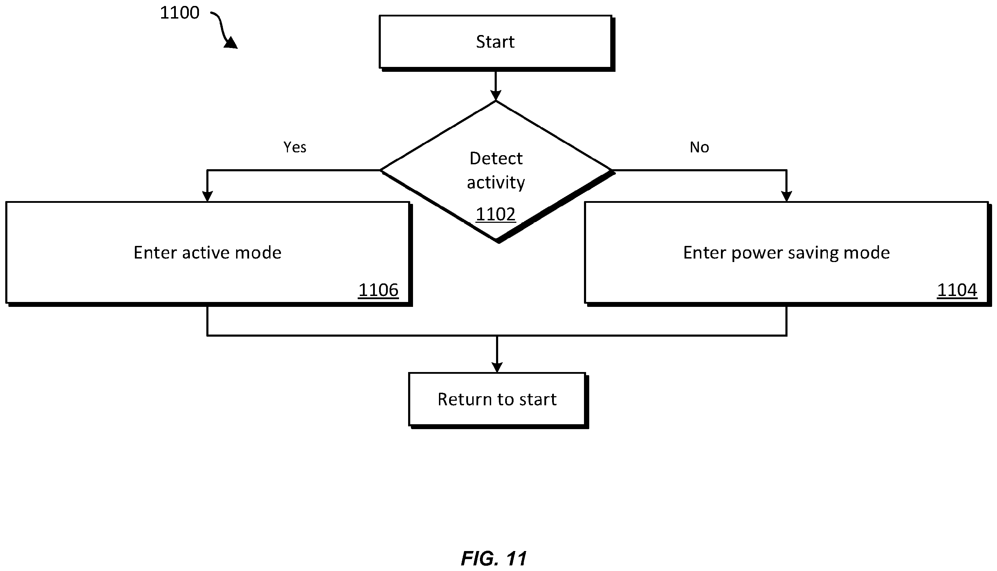

FIG. 11 illustrates of a flowchart of an example process 1100 for operating an electronic device. The process 1100 can be implemented by an electronic device such as the electronic device 120 as shown in FIG. 3. Additionally, the process 1100 can be implemented in software or hardware or any combination thereof.

At block 1102, it is detected whether an activity is being performed in an environment surrounding the electronic device based on a detector. In some implementations, the detector is an ultrasonic sensor and detecting that the activity is being performed within the environment surrounding the electronic device based on the detector includes receiving of ultrasonic signals with the ultrasonic sensor. In some implementations, the detector is a radar sensor and detecting that the activity is being performed within the environment surrounding the electronic device based on the first detector includes receiving of radar signals with the radar sensor. In other implementations, the second detector is a static charge sensor and detecting that the second activity is being performed within the environment surrounding the electronic device based on the second detector includes receiving a charge with the static charge sensor.

In response to detecting that an activity is not being performed in the environment surrounding the electronic device, at block 1104, the electronic device can enter into a power saving mode. In the power saving mode, the electronic device can be configured to turn off and/or deactivate one or more components and/or processes of the electronic device. For example, in some implementations, the electronic device can be configured to turn off a display screen of the electronic device while the electronic device is in the power saving mode. In another example, in some implementations, the electronic device can be configured to turn off one or more sensors such as an image sensor and/or an infrared sensor while the electronic device is in the power saving mode. In some implementations, the electronic device is configured to consume a first amount of power while in the power saving mode. In some implementations, the electronic device is configured to continuously monitor whether an activity is being performed in the environment surrounding the electronic device while the electronic device is in the power saving mode.

In response to detecting that an activity is being performed in the environment surrounding the electronic device, at block 1106, the electronic device can enter into an active mode. In the active mode, the electronic device can be configured to turn on and/or activate one or more components and/or processes of the electronic device. For example, in some implementations, the electronic device can be configured to turn on the display screen of the electronic device while the electronic device is in the active mode. In another example, in some implementations, the electronic device can be configured to turn on one or more sensors such as the image sensor and/or the infrared sensor while the electronic device is in the active mode. In some implementations, the electronic device is configured to consume a second amount of power that is greater than the first amount of power while in the active mode. In some implementations, the electronic device is configured to continuously monitor whether an activity is being performed in the environment surrounding the electronic device while the electronic device is in the active mode.

Having described several example configurations, various modifications, alternative constructions, and equivalents may be used within the scope of the appended claims. For example, the above elements may be components of a larger system, wherein other rules may take precedence over or otherwise modify the application of the features. Also, a number of steps may be undertaken before, during, or after the above elements are considered.

## Claims

1. A method for operating an electronic device (120) comprising:
detecting that the electronic device (120) is in a docked mode;
in response to detecting that the electronic device (120) is in the docked mode:
detecting (1004) that a first activity is being performed in an environment surrounding the electronic device (120) based on a first detector (314), wherein detecting (1004) that the first activity is being performed within the environment surrounding the electronic device (120) based on the first detector (314) comprises receiving at least one of ultrasonic signals and radar signals with the first detector (314);
classifying (1008) the first activity as corresponding to an activity type of a plurality of activity types; and
updating (1010) a display screen (326) of the electronic device (120) based on the activity type of the first activity;
detecting that the electronic device (120) is in a tablet mode; and
in response to detecting that the electronic device (120) is in the tablet mode:
detecting (1006) that a second activity is being performed within an environment surrounding the electronic device (120) based on a second detector (314), wherein detecting (1006) that second activity is being performed within the environment surrounding the electronic device (120) based on the second detector (314) comprises receiving a charge (470) with the second detector (314);
classifying (1008) the second activity as corresponding to an activity type of a plurality of activity types; and
updating (1010) the display screen (326) of the electronic device (120) based on the activity type of the second activity.

2. The method of Claim 1, wherein:
the first detector (314) comprises at least one of an ultrasonic sensor and a radar sensor;
and/or
the second detector (314) comprises a static charge sensor.

3. The method of Claim 1 or Claim 2, wherein:
classifying (108) the first activity as corresponding to an activity type of a plurality of activity types comprises classifying signals using a trained machine learning model; and/or
classifying (1008) the second activity as corresponding to an activity type of the plurality of activity types comprises classifying signals using a trained machine learning model.

4. The method of any of the preceding claims, wherein:
updating (1010) the display screen (326) of the electronic device (120) in the docked mode and updating (1010) the display screen (326) of the electronic device (120) in the tablet mode comprises at least one of brightening the display screen (326) and changing content displayed on the display screen (326).

5. The method of any of the preceding claims, wherein:
detecting (1002) that the electronic device (120) is in the docked mode comprises detecting that the electronic device (120) is attached to a docking station (150), and
detecting (1002) that the electronic device (120) is in the tablet mode comprising detecting that the electronic device (120) is detached from the docking station (150).

6. An electronic device (120) comprising:
an antenna (420);
a processing system (302, 318) including a digital signal processor (306); and
one or more computer readable storage media (304, 308) storing instructions which, when executed by the processing system (302, 318), cause the electronic device (120) to perform a method comprising:
detecting (1002) that the electronic device (120) is in a docked mode;
in response to detecting that the electronic device (120) is in the docked mode:
detecting (1004) that a first activity is being performed in an environment surrounding the electronic device (120) based on a first detector (314), wherein detecting (1004) that the first activity is being performed within the environment surrounding the electronic device (120) based on the first detector (314) comprises receiving at least one of ultrasonic signals and radar signals with the first detector (314);
classifying (1008) the first activity as corresponding to an activity type of a plurality of activity types; and
updating (1010) a display screen (326) of the electronic device (120) based on the activity type of the first activity;
detecting (1002) that the electronic device (120) is in a tablet mode; and
in response to detecting that the electronic device (120) is in the tablet mode:
detecting (1006) that a second activity is being performed within an environment surrounding the electronic device (120) based on a second detector (314), wherein detecting (1006) that second activity is being performed within the environment surrounding the electronic device (120) based on the second detector (314) comprises receiving a charge (470) with the second detector (314);
classifying (1008) the second activity as corresponding to an activity type of a plurality of activity types; and
updating (1010) the display screen (326) of the electronic device (120) based on the activity type of the second activity.

7. The electronic device (120) of Claim 6, wherein:
the first detector (314) comprises at least one of an ultrasonic sensor and a radar sensor;
and/or
the second detector (314) comprises a static charge sensor.

8. The electronic device (120) of Claim 6 or Claim 7, wherein:
classifying (1008) the first activity as corresponding to an activity type of a plurality of activity types comprises classifying signals using a trained machine learning model; and/or
wherein classifying (1008) the second activity as corresponding to an activity type of the plurality of activity types comprises classifying signals using a trained machine learning model.

9. The electronic device (120) of any of claims 6 to 8, wherein:
updating (1010) the display screen (326) of the electronic device (120) in the docked mode and updating (1010) the display screen (326) of the electronic device (120) in the tablet mode comprises at least one of brightening the display screen (326) and changing content displayed on the display screen (326).

10. The electronic device (120) of any of claims 6 to 9, wherein:
detecting (1002) that the electronic device (120) is in the docked mode comprises detecting that the electronic device (120) is attached to a docking station (150), and
detecting (1002) that the electronic device (120) is in the tablet mode comprising detecting that the electronic device (120) is detached from the docking station (150).

11. One or more non-transitory computer-readable media (304, 308) storing computer-readable instructions that, when executed by a processing system (302, 318), cause an electronic device (120) to perform a method comprising:
detecting (1002) that the electronic device (120) is in a docked mode;
in response to detecting that the electronic device (120) is in the docked mode:
detecting (1004) that a first activity is being performed in an environment surrounding the electronic device (120) based on a first detector (314), wherein detecting (1004) that the first activity is being performed within the environment surrounding the electronic device (120) based on the first detector (314) comprises receiving at least one of ultrasonic signals and radar signals with the first detector (314);
classifying (1008) the first activity as corresponding to an activity type of a plurality of activity types; and
updating (1010) a display screen (326) of the electronic device (120) based on the activity type of the first activity;
detecting (1002) that the electronic device (120) is in a tablet mode; and
in response to detecting that the electronic device (120) is in the tablet mode:
detecting (1006) that a second activity is being performed within an environment surrounding the electronic device (120) based on a second detector (314), wherein detecting (1006) that second activity is being performed within the environment surrounding the electronic device (120) based on the second detector (314) comprises receiving a charge (470) with the second detector (314);
classifying (1008) the second activity as corresponding to an activity type of a plurality of activity types; and
updating (1010) the display screen (326) of the electronic device (120) based on the activity type of the second activity.

12. The one or more non-transitory computer-readable media (304, 308) of Claim 11, wherein:
the first detector (314) comprises at least one of an ultrasonic sensor and a radar sensor;
and/or
wherein the second detector (314) comprises a static charge sensor.

13. The one or more non-transitory computer-readable media (304, 308) of Claim 11 or Claim 12, wherein:
classifying (1008) the first activity as corresponding to an activity type of a plurality of activity types comprises classifying signals using a trained machine learning model; and/or
classifying (1008) the second activity as corresponding to an activity type of the plurality of activity types comprises classifying signals using a trained machine learning model.

14. The one or more non-transitory computer-readable media (304, 308) of any of claims 11 to 13, wherein:
updating (1010) the display screen (326) of the electronic device (120) in the docked mode and updating (1010) the display screen (326) of the electronic device (120) in the tablet mode comprises at least one of brightening the display screen (326) and changing content displayed on the display screen (326).

15. The one or more non-transitory computer-readable media (304, 308) of any of claims 11 to 14, wherein:
detecting (1002) that the electronic device (120) is in the docked mode comprises detecting that the electronic device (120) is attached to a docking station (150), and
detecting (1002) that the electronic device (120) is in the tablet mode comprising detecting that the electronic device (120) is detached from the docking station (150).

## Patentansprüche

1. Verfahren zum Betreiben einer elektronischen Vorrichtung (120), umfassend:
Detektieren, dass sich die elektronische Vorrichtung (120) in einem Angedocktmodus befindet;
als Reaktion auf das Detektieren, dass sich die elektronische Vorrichtung (120) im Angedocktmodus befindet:
Detektieren (1004) basierend auf einem ersten Detektor (314), dass eine erste Aktivität in einer die elektronische Vorrichtung (120) umgebenden Umgebung durchgeführt wird, wobei das Detektieren (1004) basierend auf dem ersten Detektor (314), dass die erste Aktivität innerhalb der die elektronische Vorrichtung (120) umgebenden Umgebung durchgeführt wird, das Empfangen von mindestens einem von Ultraschallsignalen und Radarsignalen mit dem ersten Detektor (314) umfasst;
Klassifizieren (1008) der ersten Aktivität als einem Aktivitätstyp einer Vielzahl von Aktivitätstypen entsprechend; und
Aktualisieren (1010) eines Anzeigebildschirms (326) der elektronischen Vorrichtung (120) basierend auf dem Aktivitätstyp der ersten Aktivität;
Detektieren, dass sich die elektronische Vorrichtung (120) in einem Tablet-Modus befindet; und
als Reaktion auf das Detektieren, dass sich die elektronische Vorrichtung (120) im Tablet-Modus befindet:
Detektieren (1006) basierend auf einem zweiten Detektor (314), dass eine zweite Aktivität innerhalb einer die elektronische Vorrichtung (120) umgebenden Umgebung durchgeführt wird, wobei das Detektieren (1006) basierend auf dem zweiten Detektor (314), dass die zweite Aktivität innerhalb der die elektronische Vorrichtung (120) umgebenden Umgebung durchgeführt wird, das Empfangen einer Ladung (470) mit dem zweiten Detektor (314) umfasst;
Klassifizieren (1008) der zweiten Aktivität als einem Aktivitätstyp einer Vielzahl von Aktivitätstypen entsprechend; und
Aktualisieren (1010) des Anzeigebildschirms (326) der elektronischen Vorrichtung (120) basierend auf dem Aktivitätstyp der zweiten Aktivität.

2. Verfahren nach Anspruch 1, wobei:
der erste Detektor (314) mindestens eines von einem Ultraschallsensor und einem Radarsensor umfasst; und/oder
der zweite Detektor (314) einen statischen Ladungssensor umfasst.

3. Verfahren nach Anspruch 1 oder Anspruch 2, wobei:
das Klassifizieren (108) der ersten Aktivität als einem Aktivitätstyp einer Vielzahl von Aktivitätstypen entsprechend das Klassifizieren von Signalen unter Verwendung eines trainierten Maschinenlernmodells umfasst; und/oder
das Klassifizieren (1008) der zweiten Aktivität als einem Aktivitätstyp der Vielzahl von Aktivitätstypen entsprechend das Klassifizieren von Signalen unter Verwendung eines trainierten Maschinenlernmodells umfasst.

4. Verfahren nach einem der vorhergehenden Ansprüche, wobei:
das Aktualisieren (1010) des Anzeigebildschirms (326) der elektronischen Vorrichtung (120) im Angedocktmodus und das Aktualisieren (1010) des Anzeigebildschirms (326) der elektronischen Vorrichtung (120) im Tablet-Modus mindestens eines von Aufhellen des Anzeigebildschirms (326) und Ändern von auf dem Anzeigebildschirm (326) angezeigtem Inhalt umfasst.

5. Verfahren nach einem der vorhergehenden Ansprüche, wobei:
das Detektieren (1002), dass sich die elektronische Vorrichtung (120) im Angedocktmodus befindet, das Detektieren, dass die elektronische Vorrichtung (120) an eine Dockingstation (150) angeschlossen ist, umfasst und
das Detektieren (1002), dass sich die elektronische Vorrichtung (120) im Tablet-Modus befindet, das Detektieren, dass die elektronische Vorrichtung (120) von der Dockingstation (150) abgetrennt ist, umfasst.

6. Elektronische Vorrichtung (120), umfassend:
eine Antenne (420);
ein Verarbeitungssystem (302, 318), das einen digitalen Signalprozessor (306) beinhaltet; und
ein oder mehrere computerlesbare Speichermedien (304, 308), die Anweisungen speichern, die, wenn sie durch das Verarbeitungssystem (302, 318) ausgeführt werden, die elektronische Vorrichtung (120) veranlassen, ein Verfahren durchzuführen, umfassend:
Detektieren (1002), dass sich die elektronische Vorrichtung (120) in einem Angedocktmodus befindet;
als Reaktion auf das Detektieren, dass sich die elektronische Vorrichtung (120) im Angedocktmodus befindet:
Detektieren (1004) basierend auf einem ersten Detektor (314), dass eine erste Aktivität in einer die elektronische Vorrichtung (120) umgebenden Umgebung durchgeführt wird, wobei das Detektieren (1004) basierend auf dem ersten Detektor (314), dass die erste Aktivität innerhalb der die elektronische Vorrichtung (120) umgebenden Umgebung durchgeführt wird, das Empfangen von mindestens einem von Ultraschallsignalen und Radarsignalen mit dem ersten Detektor (314) umfasst;
Klassifizieren (1008) der ersten Aktivität als einem Aktivitätstyp einer Vielzahl von Aktivitätstypen entsprechend; und
Aktualisieren (1010) eines Anzeigebildschirms (326) der elektronischen Vorrichtung (120) basierend auf dem Aktivitätstyp der ersten Aktivität;
Detektieren (1002), dass sich die elektronische Vorrichtung (120) in einem Tablet-Modus befindet; und
als Reaktion auf das Detektieren, dass sich die elektronische Vorrichtung (120) im Tablet-Modus befindet:
Detektieren (1006) basierend auf einem zweiten Detektor (314), dass eine zweite Aktivität innerhalb einer die elektronische Vorrichtung (120) umgebenden Umgebung durchgeführt wird, wobei das Detektieren (1006) basierend auf dem zweiten Detektor (314), dass die zweite Aktivität innerhalb der die elektronische Vorrichtung (120) umgebenden Umgebung durchgeführt wird, das Empfangen einer Ladung (470) mit dem zweiten Detektor (314) umfasst;
Klassifizieren (1008) der zweiten Aktivität als einem Aktivitätstyp einer Vielzahl von Aktivitätstypen entsprechend; und
Aktualisieren (1010) des Anzeigebildschirms (326) der elektronischen Vorrichtung (120) basierend auf dem Aktivitätstyp der zweiten Aktivität.

7. Elektronische Vorrichtung (120) nach Anspruch 6, wobei:
der erste Detektor (314) mindestens eines von einem Ultraschallsensor und einem Radarsensor umfasst; und/oder
der zweite Detektor (314) einen statischen Ladungssensor umfasst.

8. Elektronische Vorrichtung (120) nach Anspruch 6 oder Anspruch 7, wobei:
das Klassifizieren (1008) der ersten Aktivität als einem Aktivitätstyp einer Vielzahl von Aktivitätstypen entsprechend das Klassifizieren von Signalen unter Verwendung eines trainierten Maschinenlernmodells umfasst; und/oder
wobei das Klassifizieren (1008) der zweiten Aktivität als einem Aktivitätstyp der Vielzahl von Aktivitätstypen entsprechend das Klassifizieren von Signalen unter Verwendung eines trainierten Maschinenlernmodells umfasst.

9. Elektronische Vorrichtung (120) nach einem der Ansprüche 6 bis 8, wobei:
das Aktualisieren (1010) des Anzeigebildschirms (326) der elektronischen Vorrichtung (120) im Angedocktmodus und das Aktualisieren (1010) des Anzeigebildschirms (326) der elektronischen Vorrichtung (120) im Tablet-Modus mindestens eines von Aufhellen des Anzeigebildschirms (326) und Ändern von auf dem Anzeigebildschirm (326) angezeigtem Inhalt umfasst.

10. Elektronische Vorrichtung (120) nach einem der Ansprüche 6 bis 9, wobei:
das Detektieren (1002), dass sich die elektronische Vorrichtung (120) im Angedocktmodus befindet, das Detektieren, dass die elektronische Vorrichtung (120) an eine Dockingstation (150) angeschlossen ist, umfasst und
das Detektieren (1002), dass sich die elektronische Vorrichtung (120) im Tablet-Modus befindet, das Detektieren, dass die elektronische Vorrichtung (120) von der Dockingstation (150) abgetrennt ist, umfasst.

11. Ein oder mehrere nichtflüchtige, computerlesbare Medien (304, 308), die computerlesbare Anweisungen speichern, die, wenn sie durch ein Verarbeitungssystem (302, 318) ausgeführt werden, eine elektronische Vorrichtung (120) veranlassen, ein Verfahren durchzuführen, umfassend:
Detektieren (1002), dass sich die elektronische Vorrichtung (120) in einem Angedocktmodus befindet;
als Reaktion auf das Detektieren, dass sich die elektronische Vorrichtung (120) im Angedocktmodus befindet:
Detektieren (1004) basierend auf einem ersten Detektor (314), dass eine erste Aktivität in einer die elektronische Vorrichtung (120) umgebenden Umgebung durchgeführt wird, wobei das Detektieren (1004) basierend auf dem ersten Detektor (314), dass die erste Aktivität innerhalb der die elektronische Vorrichtung (120) umgebenden Umgebung durchgeführt wird, das Empfangen von mindestens einem von Ultraschallsignalen und Radarsignalen mit dem ersten Detektor (314) umfasst;
Klassifizieren (1008) der ersten Aktivität als einem Aktivitätstyp einer Vielzahl von Aktivitätstypen entsprechend; und
Aktualisieren (1010) eines Anzeigebildschirms (326) der elektronischen Vorrichtung (120) basierend auf dem Aktivitätstyp der ersten Aktivität;
Detektieren (1002), dass sich die elektronische Vorrichtung (120) in einem Tablet-Modus befindet; und
als Reaktion auf das Detektieren, dass sich die elektronische Vorrichtung (120) im Tablet-Modus befindet:
Detektieren (1006) basierend auf einem zweiten Detektor (314), dass eine zweite Aktivität innerhalb einer die elektronische Vorrichtung (120) umgebenden Umgebung durchgeführt wird, wobei das Detektieren (1006) basierend auf dem zweiten Detektor (314), dass die zweite Aktivität innerhalb der die elektronische Vorrichtung (120) umgebenden Umgebung durchgeführt wird, das Empfangen einer Ladung (470) mit dem zweiten Detektor (314) umfasst;
Klassifizieren (1008) der zweiten Aktivität als einem Aktivitätstyp einer Vielzahl von Aktivitätstypen entsprechend; und
Aktualisieren (1010) des Anzeigebildschirms (326) der elektronischen Vorrichtung (120) basierend auf dem Aktivitätstyp der zweiten Aktivität.

12. Ein oder mehrere nichtflüchtige, computerlesbare Medien (304, 308) nach Anspruch 11, wobei:
der erste Detektor (314) mindestens eines von einem Ultraschallsensor und einem Radarsensor umfasst; und/oder
wobei der zweite Detektor (314) einen statischen Ladungssensor umfasst.

13. Ein oder mehrere nichtflüchtige, computerlesbare Medien (304, 308) nach Anspruch 11 oder Anspruch 12, wobei:
das Klassifizieren (1008) der ersten Aktivität als einem Aktivitätstyp einer Vielzahl von Aktivitätstypen entsprechend das Klassifizieren von Signalen unter Verwendung eines trainierten Maschinenlernmodells umfasst; und/oder
das Klassifizieren (1008) der zweiten Aktivität als einem Aktivitätstyp der Vielzahl von Aktivitätstypen entsprechend das Klassifizieren von Signalen unter Verwendung eines trainierten Maschinenlernmodells umfasst.

14. Ein oder mehrere nichtflüchtige, computerlesbare Medien (304, 308) nach einem der Ansprüche 11 bis 13, wobei:
das Aktualisieren (1010) des Anzeigebildschirms (326) der elektronischen Vorrichtung (120) im Angedocktmodus und das Aktualisieren (1010) des Anzeigebildschirms (326) der elektronischen Vorrichtung (120) im Tablet-Modus mindestens eines von Aufhellen des Anzeigebildschirms (326) und Ändern von auf dem Anzeigebildschirm (326) angezeigtem Inhalt umfasst.

15. Ein oder mehrere nichtflüchtige, computerlesbare Medien (304, 308) nach einem der Ansprüche 11 bis 14, wobei:
das Detektieren (1002), dass sich die elektronische Vorrichtung (120) im Angedocktmodus befindet, das Detektieren, dass die elektronische Vorrichtung (120) an eine Dockingstation (150) angeschlossen ist, umfasst und
das Detektieren (1002), dass sich die elektronische Vorrichtung (120) im Tablet-Modus befindet, das Detektieren, dass die elektronische Vorrichtung (120) von der Dockingstation (150) abgetrennt ist, umfasst.

## Revendications

1. Procédé de fonctionnement d'un dispositif électronique (120) comprenant :
le fait de détecter que le dispositif électronique (120) est en mode ancré ;
en réponse au fait de détecter que le dispositif électronique (120) est en mode ancré :
le fait de détecter (1004) qu'une première activité est effectuée dans un environnement entourant le dispositif électronique (120) sur la base d'un premier détecteur (314), dans lequel le fait de détecter (1004) qu'une première activité est effectuée dans l'environnement entourant le dispositif électronique (120) sur la base du premier détecteur (314) comprend la réception d'au moins l'un d'un signal ultrasonore et d'un signal radar avec le premier détecteur (314) ;
le classement (1008) de la première activité comme correspondant à un type d'activité parmi une pluralité de types d'activités ; et
la mise à jour (1010) d'un écran d'affichage (326) du dispositif électronique (120) sur la base du type d'activité de la première activité ;
le fait de détecter que le dispositif électronique (120) est en mode tablette ; et
en réponse au fait de détecter que le dispositif électronique (120) est en mode tablette :
le fait de détecter (1006) qu'une seconde activité est effectuée dans un environnement entourant le dispositif électronique (120) sur la base d'un second détecteur (314), dans lequel le fait de détecter (1006) qu'une seconde activité est effectuée dans l'environnement entourant le dispositif électronique (120) sur la base du second détecteur (314) comprend la réception d'une charge (470) avec le second détecteur (314) ;
le classement (1008) de la seconde activité comme correspondant à un type d'activité parmi une pluralité de types d'activités ; et
la mise à jour (1010) de l'écran d'affichage (326) du dispositif électronique (120) sur la base du type d'activité de la seconde activité.

2. Procédé selon la revendication 1, dans lequel :
le premier détecteur (314) comprend au moins l'un d'un capteur ultrasonore et/ou d'un capteur radar ; et/ou
le second détecteur (314) comprend un capteur de charge statique.

3. Procédé selon la revendication 1 ou la revendication 2, dans lequel :
le classement (108) de la première activité comme correspondant à un type d'activité parmi une pluralité de types d'activités comprend le classement des signaux à l'aide d'un modèle d'apprentissage automatique entraîné ; et/ou
le classement (1008) de la seconde activité comme correspondant à un type d'activité parmi la pluralité de types d'activités comprend le classement des signaux à l'aide d'un modèle d'apprentissage automatique entraîné.

4. Procédé selon l'une quelconque des revendications précédentes, dans lequel :
la mise à jour (1010) de l'écran d'affichage (326) du dispositif électronique (120) en mode ancré et la mise à jour (1010) de l'écran d'affichage (326) du dispositif électronique (120) en mode tablette comprend au moins l'une des actions suivantes : éclaircir l'écran d'affichage (326) et modifier le contenu affiché sur l'écran d'affichage (326).

5. Procédé selon l'une quelconque des revendications précédentes, dans lequel :
le fait de détecter (1002) que le dispositif électronique (120) est en mode ancré comprend le fait de détecter que le dispositif électronique (120) est ancré à une station d'accueil (150), et
le fait de détecter (1002) que le dispositif électronique (120) est en mode tablette comprend le fait de détecter que le dispositif électronique (120) est détaché de la station d'accueil (150).

6. Dispositif électronique (120) comprenant :
une antenne (420) ;
un système de traitement (302, 318) comportant un processeur de signal numérique (306) ; et
un ou plusieurs supports de stockage lisibles par ordinateur (304, 308) stockant des instructions qui, lorsqu'elles sont exécutées par le système de traitement (302, 318), amènent le dispositif électronique (120) à réaliser un procédé comprenant :
le fait de détecter (1002) que le dispositif électronique (120) est en mode ancré ;
en réponse au fait de détecter que le dispositif électronique (120) est en mode ancré :
le fait détecter (1004) qu'une première activité est effectuée dans un environnement entourant le dispositif électronique (120) sur la base d'un premier détecteur (314), dans lequel le fait de détecter (1004) qu'une première activité est effectuée dans l'environnement entourant le dispositif électronique (120) sur la base du premier détecteur (314) comprend la réception d'au moins l'un d'un signal ultrasonore et d'un signal radar avec le premier détecteur (314) ;
le classement (1008) de la première activité comme correspondant à un type d'activité parmi une pluralité de types d'activités ; et
la mise à jour (1010) d'un écran d'affichage (326) du dispositif électronique (120) sur la base du type d'activité de la première activité ;
le fait de détecter (1002) que le dispositif électronique (120) est en mode tablette ; et
en réponse au fait de détecter que le dispositif électronique (120) est en mode tablette :
le fait de détecter (1006) qu'une seconde activité est effectuée dans un environnement entourant le dispositif électronique (120) sur la base d'un second détecteur (314), dans lequel le fait de détecter (1006) qu'une seconde activité est effectuée dans l'environnement entourant le dispositif électronique (120) sur la base du second détecteur (314) comprend la réception d'une charge (470) avec le second détecteur (314) ;
le classement (1008) de la seconde activité comme correspondant à un type d'activité parmi une pluralité de types d'activités ; et
la mise à jour (1010) de l'écran d'affichage (326) du dispositif électronique (120) sur la base du type d'activité de la seconde activité.

7. Dispositif électronique (120) selon la revendication 6, dans lequel :
le premier détecteur (314) comprend au moins l'un d'un capteur ultrasonore et/ou d'un capteur radar ; et/ou
le second détecteur (314) comprend un capteur de charge statique.

8. Dispositif électronique (120) selon la revendication 6 ou la revendication 7, dans lequel :
le classement (1008) de la première activité comme correspondant à un type d'activité parmi une pluralité de types d'activités comprend le classement des signaux à l'aide d'un modèle d'apprentissage automatique entraîné ; et/ou
dans lequel le classement (1008) de la seconde activité comme correspondant à un type d'activité parmi la pluralité de types d'activités comprend le classement des signaux à l'aide d'un modèle d'apprentissage automatique entraîné.

9. Dispositif électronique (120) selon l'une quelconque des revendications 6 à 8, dans lequel :
la mise à jour (1010) de l'écran d'affichage (326) du dispositif électronique (120) en mode ancré et la mise à jour (1010) de l'écran d'affichage (326) du dispositif électronique (120) en mode tablette comprend au moins l'une des actions suivantes : éclaircir l'écran d'affichage (326) et modifier le contenu affiché sur l'écran d'affichage (326).

10. Dispositif électronique (120) selon l'une quelconque des revendications 6 à 9, dans lequel :
le fait de détecter (1002) que le dispositif électronique (120) est en mode ancré comprend le fait de détecter que le dispositif électronique (120) est ancré à une station d'accueil (150), et
le fait de détecter (1002) que le dispositif électronique (120) est en mode tablette comprend le fait de détecter que le dispositif électronique (120) est détaché de la station d'accueil (150).

11. Un ou plusieurs supports non transitoires lisibles par ordinateur (304, 308) stockant des instructions lisibles par ordinateur qui, lorsqu'elles sont exécutées par un système de traitement (302, 318), amènent un dispositif électronique (120) à réaliser un procédé comprenant :
le fait de détecter (1002) que le dispositif électronique (120) est en mode ancré ;
en réponse au fait de détecter que le dispositif électronique (120) est en mode ancré :
le fait détecter (1004) qu'une première activité est effectuée dans un environnement entourant le dispositif électronique (120) sur la base d'un premier détecteur (314), dans lequel le fait de détecter (1004) qu'une première activité est effectuée dans l'environnement entourant le dispositif électronique (120) sur la base du premier détecteur (314) comprend la réception d'au moins l'un d'un signal ultrasonore et d'un signal radar avec le premier détecteur (314) ;
le classement (1008) de la première activité comme correspondant à un type d'activité parmi une pluralité de types d'activités ; et
la mise à jour (1010) d'un écran d'affichage (326) du dispositif électronique (120) sur la base du type d'activité de la première activité ;
le fait de détecter (1002) que le dispositif électronique (120) est en mode tablette ; et
en réponse au fait de détecter que le dispositif électronique (120) est en mode tablette :
le fait de détecter (1006) qu'une seconde activité est effectuée dans un environnement entourant le dispositif électronique (120) sur la base d'un second détecteur (314), dans lequel le fait de détecter (1006) qu'une seconde activité est effectuée dans l'environnement entourant le dispositif électronique (120) sur la base du second détecteur (314) comprend la réception d'une charge (470) avec le second détecteur (314) ;
le classement (1008) de la seconde activité comme correspondant à un type d'activité parmi une pluralité de types d'activités ; et
la mise à jour (1010) de l'écran d'affichage (326) du dispositif électronique (120) sur la base du type d'activité de la seconde activité.

12. Un ou plusieurs supports non transitoires lisibles par ordinateur (304, 308) selon la revendication 11, dans lesquels :
le premier détecteur (314) comprend au moins l'un d'un capteur ultrasonore et/ou d'un capteur radar ; et/ou
dans lesquels le second détecteur (314) comprend un capteur de charge statique.

13. Un ou plusieurs supports non transitoires lisibles par ordinateur (304, 308) selon la revendication 11 ou la revendication 12, dans lesquels :
le classement (1008) de la première activité comme correspondant à un type d'activité parmi une pluralité de types d'activités comprend le classement des signaux à l'aide d'un modèle d'apprentissage automatique entraîné ; et/ou
le classement (1008) de la seconde activité comme correspondant à un type d'activité parmi la pluralité de types d'activités comprend le classement des signaux à l'aide d'un modèle d'apprentissage automatique entraîné.

14. Un ou plusieurs supports non transitoires lisibles par ordinateur (304, 308) selon l'une quelconque des revendications 11 à 13, dans lesquels :
la mise à jour (1010) de l'écran d'affichage (326) du dispositif électronique (120) en mode ancré et la mise à jour (1010) de l'écran d'affichage (326) du dispositif électronique (120) en mode tablette comprend au moins l'une des actions suivantes : éclaircir l'écran d'affichage (326) et modifier le contenu affiché sur l'écran d'affichage (326).

15. Un ou plusieurs supports non transitoires lisibles par ordinateur (304, 308) selon l'une quelconque des revendications 11 à 14, dans lesquels :
le fait de détecter (1002) que le dispositif électronique (120) est en mode ancré comprend le fait de détecter que le dispositif électronique (120) est ancré à une station d'accueil (150), et
le fait de détecter (1002) que le dispositif électronique (120) est en mode tablette comprend le fait de détecter que le dispositif électronique (120) est détaché de la station d'accueil (150).
